# FASCICULE DE BREVET EUROPEEN

(11) **EP 3 515 738 B1**
(45) Date de publication et mention de la délivrance du brevet: **04.11.2020**
(21) Numéro de dépôt: 17767865.3
(22) Date de dépôt: 22.08.2017
(51) Int. Cl.: B60K 1/00, B60K 1/04

(54) **SYSTEME DE COQUE POUR DES BATTERIES DE TRACTION D'UN VEHICULE HYBRIDE OU ELECTRIQUE**
GEHÄUSESYSTEM FÜR TRAKTIONSBATTERIEN EINES HYBRID- ODER ELEKTROFAHRZEUGES
SHELL SYSTEM FOR TRACTION BATTERIES OF A HYBRID OR ELECTRIC VEHICLE

(30) Priorité: 23.09.2016 FR 1658936
(43) Date de publication de la demande: 31.07.2019
(73) Titulaire: PSA Automobiles SA, 78300 Poissy (FR)
(72) Inventeur: BOURIOT, Frank, 25550 Allondanes (FR); FOURNAISE, Eddy, 25750 Arcey (FR); FAVRET, Regis, 25400 Audincourt (FR)
(86) Numéro de dépôt international: PCT/FR2017/052251
(87) Numéro de publication internationale: WO 2018/055248

(56) Documents cités:
- EP-A1- 2 070 754
- WO-A1-2013/017051
- WO-A1-2014/033384
- FR-A1- 2 964 622

## Description

La présente invention concerne système de coque prévu pour recevoir des batteries de traction d'un véhicule hybride ou électrique, ainsi qu'un véhicule équipé d'un tel système de coque.

Certains véhicules hybrides ou électriques comportent sous la caisse du véhicule, un ensemble de batteries alimentant un moteur électrique de traction du véhicule, comprenant des batteries installées dans une coque de protection et connectées ensemble, afin de les protéger des chocs ou des projections.

Lors de l'assemblage du véhicule, on élève sous la caisse l'ensemble de batteries complet préparé à l'avance, pour venir le fixer de manière rapide sous cette caisse.

Un type de fixation connu pour fixer un ensemble de batterie sous la caisse d'un véhicule, présenté notamment par le document FR-A1-2964622, comporte sur un premier élément formé par la caisse du véhicule ou l'ensemble de batteries, une bague de fixation qui reçoit un axe coulissant dedans solidaire de l'autre élément. Une rotation de la bague vient ensuite bloquer cette bague sur l'axe, ce qui fixe de manière rapide l'ensemble de batterie sous le véhicule.

Un autre type de fixation connu pour fixer un ensemble de batteries sous la caisse du véhicule, comporte sous la caisse du véhicule des tôles de support présentant chacune un bossage tourné vers le bas, comportant au centre un perçage taraudé.

La coque de batteries comporte une demi-coque inférieure et une demi-coque supérieure comprenant chacune un contour formant un rebord suivant un plan horizontal, ces rebords étant assemblés entre eux pour former un plan de joint fermant la coque.

Les rebords comportent des perçages recevant chacun par en dessous une vis de serrage, qui traverse ensuite une entretoise formée par un tube cylindrique, pour venir se visser dans le perçage taraudé d'une tôle de support. L'entretoise définit une distance entre la tôle de support de la caisse et le plan de joint du système de batteries.

On connait par exemple le document de brevet WO-A1-2013017051 divulguant le préambule de la revendication 1.

Toutefois dans certains cas on dispose sous la caisse du véhicule d'une accessibilité limitée pour accéder à cette entretoise, qui rend difficile son maintien sur les rebords de la coque pendant que l'on engage en dessous la vis de serrage.

On peut en variante souder à l'avance les entretoises sur la coque ou sur la caisse du véhicule, pour assurer leurs maintiens.

Cependant avec des demi-coques réalisées dans des tôles fines, et les rebords formant des plans de dimension réduite pour limiter l'encombrement global du système de batterie, dans certains cas on ne peut pas effectuer de soudure des entretoises sur la coque. Pour des raisons similaires on ne peut pas non plus dans certains cas souder ces entretoises sur les tôles de support de la caisse du véhicule.

En variante on peut réaliser une pièce supplémentaire de maintien de l'entretoise sur la caisse du véhicule ou sur le système de batteries. Mais cette pièce nécessite une opération complémentaire de montage, et des coûts additionnels.

Par ailleurs, la réalisation de tôles de support comportant un bossage de grande hauteur afin d'intégrer la hauteur de l'entretoise directement dans ces supports pour éviter l'ajout d'une entretoise, n'est pas toujours possible.

La présente invention a notamment pour but de résoudre ces problèmes de l'art antérieur.

Elle propose à cet effet un système de coque prévu pour recevoir des batteries de traction d'un véhicule hybride ou électrique comprenant deux demi-coques comportant chacune un rebord suivant un plan horizontal pour les superposer avec un joint d'étanchéité intercalé entre eux, et comprenant des entretoises prévues pour recevoir chacune une vis de serrage traversant au moins un rebord puis l'entretoise pour se serrer ensuite sous la caisse du véhicule, ces entretoises présentant un épaulement circulaire, ce système étant remarquable en ce que ces entretoises forment des tubes cylindriques prévus pour recevoir chacun la vis de fixation, l'épaulement circulaire s'insérant entre les deux rebords des demi-coques dans l'épaisseur du joint d'étanchéité.

Un avantage de ce système de coque est que l'épaulement circulaire inséré entre les deux rebords, avec un serrage axial de cet épaulement par ces rebords, assure un maintien de l'entretoise qui présente alors son perçage axial ajusté sur un perçage correspondant du rebord de la demi-coque inférieure.

On peut assembler au préalable le système de coque complet avec les batteries à l'intérieur et les entretoises en position, puis monter l'ensemble de manière simple et rapide sous le véhicule sans s'occuper du maintien de ces entretoises.

Le système de coque selon l'invention peut de plus comporter une ou plusieurs des caractéristiques suivantes, qui peuvent être combinées entre elles.

Avantageusement, l'épaulement est disposé à la base de l'entretoise, la face inférieure de l'entretoise étant en appui sur le dessus du rebord de la demi-coque inférieure.

Avantageusement, après le montage de l'entretoise sur le système de coque, son épaulement circulaire est serré axialement entre les deux rebords des demi-coques.

Avantageusement, le système de coque comporte un moyen de centrage de l'entretoise.

Dans ce cas, le rebord de la demi-coque supérieure peut comporter une découpe formant un arc de cercle, centrée sur un perçage du rebord de la demi-coque inférieure prévu pour recevoir une vis de serrage, le contour extérieur du tube cylindrique de l'entretoise s'ajustant dans cette découpe.

Avantageusement, le contour extérieur du tube cylindrique de l'entretoise s'ajuste sur la découpe en arc de cercle du rebord de la demi-coque supérieure.

L'invention a aussi pour objet un procédé d'assemblage d'un système de coque comprenant l'une quelconque des caractéristiques précédentes, qui comporte une étape d'insertion de l'épaulement circulaire de l'entretoise entre les deux rebords des demi-coques, avant le serrage de vis serrant ces rebords entre eux.

L'invention a de plus pour objet un véhicule automobile hybride ou électrique, comportant des batteries disposées dans un système de coque comprenant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un dessin d'un système de coque selon l'invention ;
- la figure 2 est une vue de dessous de la caisse d'un véhicule comportant un ensemble de batteries équipé de ce système de coque ;
- la figure 3 est une vue de détail du système de coque avant la mise en place de l'entretoise ; et
- les figures 4 et 5 sont respectivement des vues de face et de dessous de la fixation de ce système de coque sur le véhicule.

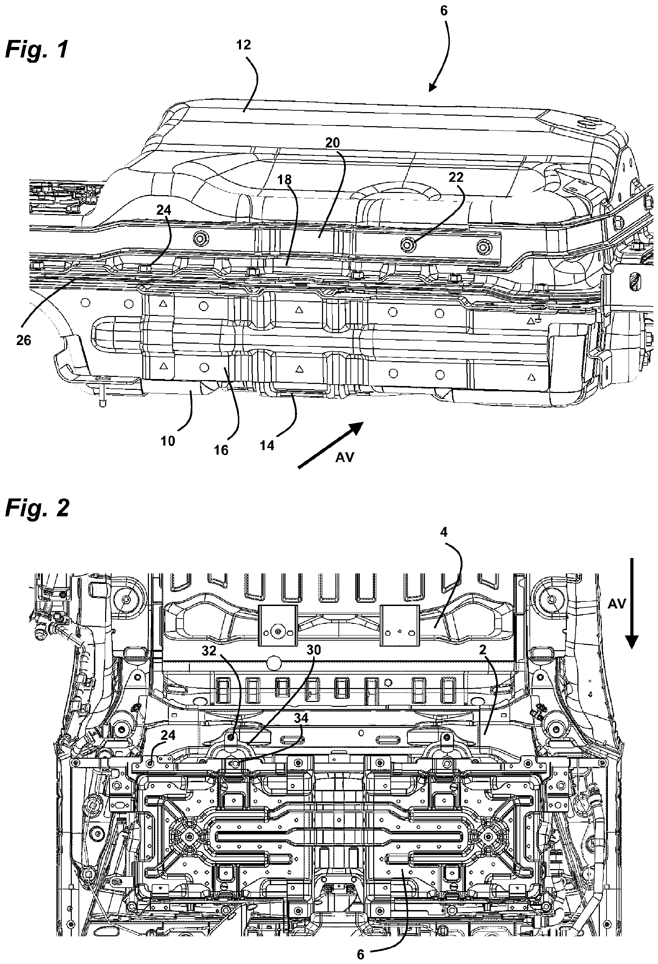

La figure 1 présente un système de coque 6 comportant une demi-coque inférieure 10 et une demi-coque supérieure 12, comprenant chacune un contour formant un rebord 26 disposé suivant un plan horizontal. Les rebords 26 sont assemblés entre eux par une série de vis de fermeture 24 avec un joint d'étanchéité interposé, pour fermer le volume intérieur comportant les batteries afin d'assurer une protection.

Le côté avant du véhicule est indiqué par la flèche notée « AV ».

La face arrière de la demi-coque inférieure 10 comporte une première tôle de renfort inférieur 14, et une deuxième tôle de renfort inférieur 16 superposée sur cette première tôle. La première 14 et la deuxième tôle de renfort inférieur 16 comportent des rebords venant en dessous du rebord 26 de la demi-coque inférieure 10, pour le renforcer.

La face arrière de la demi-coque supérieure 12 comporte une tôle de renfort supérieur 18 comprenant un rebord venant au-dessus du rebord 26 de la demi-coque supérieure 12, pour le renforcer.

Un profilé de renfort supérieur 20 présentant une section transversale en forme de « U », comporte sa partie centrale serrée sur la tôle de renfort supérieur 18 par des vis 22, afin de rigidifier fortement la demi-coque supérieure 12.

Les vis de fermeture 24 insérées en dessous du rebord 26 de la demi-coque inférieure 10, traversent successivement ce rebord, le joint d'étanchéité intermédiaire, le rebord de la demi-coque supérieure 12 et le rebord de la tôle de renfort supérieur 18, pour recevoir enfin un écrou supérieur de serrage.

La figure 2 présente le système de coque 6 disposé à plat sous la caisse du véhicule, en avant d'une traverse d'assise 2 se trouvant devant le plancher 4 du coffre du véhicule.

La traverse d'assise 2 reçoit en dessous, de chaque côté dans la direction latérale, une tôle de support 30 présentant une face supérieure plane recevant trois vis de fixation 32 serrées sous la caisse du véhicule, et un bossage central descendant vers le bas, comportant au centre un taraudage.

Pour chaque tôle de support 30, une vis de fixation 34 traverse successivement le rebord de la demi-coque inférieure 10 puis une entretoise formant un tube, pour venir se serrer dans le taraudage de cette tôle de support. En prévoyant une mise en place préalable et un maintien de l'entretoise sur le système de coque 6, il ne reste plus après avoir positionné le système de batteries sous la caisse du véhicule, qu'à engager les deux vis de fixation 34 est à les serrer sans s'occuper du maintien de l'entretoise.

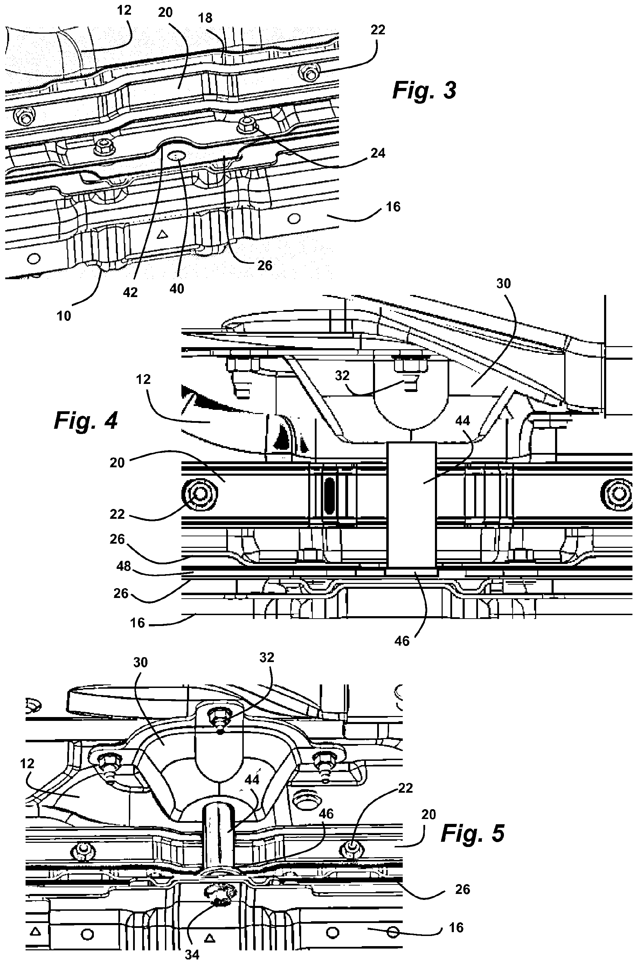

La figure 3 présente la demi-coque supérieure 12 comportant sur les découpe de son rebord et du rebord du renfort supérieur 18, un creux 42 formant sensiblement un demi-cercle qui est centré sur un perçage 40 du rebord de la demi-coque inférieure 10. De cette manière on dégage un espace circulaire autour du perçage 40, sur le rebord 26 de la demi-coque inférieure 10.

Les figures 4 et 5 présentent l'entretoise 44 formant un tube cylindrique, présentant un diamètre extérieur qui s'ajuste dans le creux circulaire 42 du rebord 26 de la demi-coque supérieure 12. Cet ajustage dans le creux circulaire 42 permet de positionner automatiquement le perçage axial de l'entretoise 44 sur le perçage 40 du rebord 26 de la demi-coque inférieure 10.

La figure 4 présente l'entretoise 44 comportant à sa base un épaulement circulaire extérieur 46, dont la petite hauteur correspond sensiblement à l'épaisseur du joint d'étanchéité 48 serré entre les rebords 26 des demi-coques inférieure 10 et supérieure 12.

Le fournisseur préparant l'ensemble de batteries comprenant les batteries fixées dans le système de coque 6, lors de l'assemblage des demi-coques 10, 12 insère l'épaulement 46 de chaque entretoise 44 dans l'épaisseur du joint d'étanchéité 48, entre les rebords 26 de ces demi-coques. Les entretoises 44 sont alors maintenues par un serrage axial de leur épaulement 46 entre les deux rebords 26.

La figure 5 présente le montage du système de batteries sous la caisse du véhicule, formant un sous-ensemble complet préparé à l'avance, comprenant les entretoises 44 positionnées et fixées dessus. Il ne reste plus pour l'opérateur qu'à insérer les vis de fixation 34 et à les visser, sans s'occuper du maintien des entretoises 44.

On réalise de cette manière un montage simple, rapide et sécurisé du système de batteries, nécessitant très peu d'adaptations pour assurer le maintien des entretoises 44 dessus. En pratique une simple modification de la découpe du rebord 26 de la demi-coque supérieure 12 suffit pour assurer cette fixation, sans modifier les formes emboutissage, et sans ajouter d'opération de soudure.

## Revendications

1. Système de coque prévu pour recevoir des batteries de traction d'un véhicule hybride ou électrique, comprenant deux demi-coques (10, 12) comportant chacune un rebord (26) suivant un plan horizontal pour les superposer avec un joint d'étanchéité (48) intercalé entre eux, et comprenant des entretoises (44) prévues pour recevoir chacune une vis de fixation (34) traversant au moins un rebord (26) puis l'entretoise (44) pour se serrer ensuite sous la caisse du véhicule, ces entretoises (44) présentant un épaulement circulaire (46), **caractérisé en ce que** ces entretoises (44) forment des tubes cylindriques prévus pour recevoir chacun la vis de fixation (34), l'épaulement circulaire (46) s'insérant entre les deux rebords (26) des demi-coques (10, 12) dans l'épaisseur du joint d'étanchéité (48).

2. Système de coque selon la revendication 1, **caractérisé en ce que** l'épaulement (46) est disposé à la base de l'entretoise (44), la face inférieure de l'entretoise (44) étant en appui sur le dessus du rebord (26) de la demi-coque inférieure (10).

3. Système de coque selon la revendication 1 ou 2, **caractérisé en ce qu'**après le montage de l'entretoise (44) sur le système de coque (6), son épaulement circulaire (46) est serré axialement entre les deux rebords (26) des demi-coques (10, 12).

4. Système de coque selon l'une quelconque des revendications précédentes, **caractérisé en ce qu'**il comporte un moyen de centrage de l'entretoise (44).

5. Système de coque selon la revendication 4, **caractérisé en ce que** le rebord (26) de la demi-coque supérieure (12) comporte une découpe (42) formant un arc de cercle, centrée sur un perçage (40) du rebord de la demi-coque inférieure (10) prévu pour recevoir une vis de fixation (34), le contour extérieur du tube cylindrique de l'entretoise (44) s'ajustant dans cette découpe (42).

6. Procédé d'assemblage d'un système de coque (6) selon l'une quelconque des revendications précédentes, **caractérisé en ce qu'**il comporte une étape d'insertion de l'épaulement circulaire (46) de l'entretoise (44) entre les deux rebords (26) des demi-coques (10, 12), avant le serrage de vis (24) serrant ces rebords (26) entre eux.

7. Véhicule automobile hybride ou électrique, **caractérisé en ce qu'**il comporte des batteries disposées dans un système de coque (6) selon l'une quelconque des revendications 1 à 5.

## Patentansprüche

1. Schalensystem zur Aufnahme von Traktionsbatterien eines Hybrid- oder Elektrofahrzeugs mit zwei Halbschalen (10, 12) mit jeweils einem Flansch (26) in horizontaler Ebene, um diese mit einer Dichtung (48) zu überlagern), die zwischen ihnen angeordnet sind und Abstandhalter (44) umfassen, die jeweils dazu bestimmt sind, eine Befestigungsschraube (34) aufzunehmen, die durch mindestens einen Flansch (26) und dann den Abstandhalter (44) verläuft, um diese Abstandshalter dann unter der Fahrzeugkarosserie festzuklemmen (44) mit einer kreisförmigen Schulter (46), die **dadurch gekennzeichnet ist, dass** diese Abstandshalter (44) zylindrische Rohre bilden, die jeweils die Befestigungsschraube (34) aufnehmen sollen, wobei die kreisförmige Schulter (46) zwischen die beiden Flansche eingeführt wird (26) der Halbschalen (10, 12) in der Dicke der Dichtung (48).

2. Schalensystem nach Anspruch 1, **dadurch gekennzeichnet, dass** die Schulter (46) an der Basis des Abstandshalters (44) angeordnet ist, wobei die Unterseite des Abstandshalters (44) oben auf der Felge abgestützt ist (26) der unteren Halbschale (10).

3. Schalensystem nach Anspruch 1 oder 2, **dadurch gekennzeichnet, dass** nach der Montage des Abstandshalters (44) am Mantelsystem (6) dessen kreisförmige Schulter (46) axial zwischen den beiden Flanschen (26) eingespannt ist) Halbschalen (10, 12).

4. Schalensystem nach einem der vorhergehenden Ansprüche, **gekennzeichnet dadurch, dass** es Mittel zum Zentrieren des Abstandshalters (44) umfasst.

5. Schalensystem nach Anspruch 4, **dadurch gekennzeichnet, dass** der Rand (26) der oberen Halbschale (12) einen Ausschnitt (42) aufweist, der einen Kreisbogen bildet, der auf einer Bohrung (40) des Randes des untere Halbschale (10) zur Aufnahme einer Befestigungsschraube (34), wobei die Außenkontur des zylindrischen Rohrs des Abstandshalters (44) in diesen Ausschnitt (42) passt.

6. Verfahren zum Zusammenbau eines Schalensystems (6) gemäß einem der vorhergehenden Ansprüche, das **dadurch gekennzeichnet ist, dass** es einen Schritt zum Einführen der kreisförmigen Schulter (46) des Abstandshalters (44) umfasst zwischen den beiden Kanten (26) der Halbschalen (10, 12), bevor die Schrauben (24) festgezogen werden, die diese Kanten (26) zusammenklemmen.

7. Hybrid- oder Elektrofahrzeug, **gekennzeichnet dadurch, dass** es Batterien umfasst, die in einem Schalensystem (6) gemäß einem der Ansprüche 1 bis 5 angeordnet sind.

## Claims

1. Shell system designed to receive traction batteries of a hybrid or electric vehicle, comprising two half-shells (10, 12) each comprising a flange (26) in a horizontal plane to superimpose them with a gasket, seal (48) interposed between them, and comprising spacers (44) provided to each receive a fixing screw (34) passing through at least one flange (26) then the spacer (44) to then clamp under the vehicle body, these spacers (44) having a circular shoulder (46), **characterized in that** these spacers (44) form cylindrical tubes each intended to receive the fixing screw (34), the circular shoulder (46) being inserted between the two edges (26) of the half -shells (10, 12) in the thickness of the seal (48).

2. Shell system according to claim 1, **characterized in that** the shoulder (46) is disposed at the base of the spacer (44), the underside of the spacer (44) being supported on the top of the rim (26) of the lower half-shell (10).

3. Shell system according to claim 1 or 2, **characterized in that** after mounting the spacer (44) on the shell system (6), its circular shoulder (46) is clamped axially between the two flanges (26) half-shells (10, 12).

4. Shell system according to any one of the preceding claims, **characterized in that** it comprises a means for centering the spacer (44).

5. Shell system according to claim 4, **characterized in that** the rim (26) of the upper half-shell (12) has a cutout (42) forming an arc of a circle, centered on a bore (40) of the rim of the lower half-shell (10) designed to receive a fixing screw (34), the outer contour of the cylindrical tube of the spacer (44) fitting into this cutout (42).

6. A method of assembling a shell system (6) according to any one of the preceding claims, **characterized in that** it comprises a step of inserting the circular shoulder (46) of the spacer (44) between the two edges (26) of the half-shells (10, 12), before tightening screws (24) clamping these edges (26) together.

7. Hybrid or electric motor vehicle, **characterized in that** it comprises batteries arranged in a shell system (6) according to any one of claims 1 to 5.
